Europäisches Patentamt

European Patent Office (11) Publication number: **0 043 170**

Office européen des brevets A1

(12) EUROPEAN PATENT APPLICATION

(21) Application number: 81200726.8

(51) Int. Cl.³: **G 01 N 3/00**
G 01 M 19/00

(22) Date of filing: 27.06.81

(30) Priority: 27.06.80 NL 8003724
11.09.80 NL 8005109

(43) Date of publication of application:
06.01.82 Bulletin 82/1

(84) Designated Contracting States:
AT BE CH DE FR GB IT LI LU NL SE

(71) Applicant: STAMICARBON B.V.
Postbus 10
NL-6160 MC Geleen(NL)

(72) Inventor: Mooij, Johannes Jacobus
Lintjeshaag 8
NL-6141 MB Limbricht(NL)

(74) Representative: Hoogstraten, Willem Cornelis
Roeland et al,
OCTROOIBUREAU DSM Postbus 9
NL-6160 MA Geleen(NL)

(54) Process and device for selecting damaged plastic crates.

(57) The invention relates to a process and a device to select damage specimens from a number of crates.

By subjecting the crates in the device to a given amount of deflection and comparing the force required with a maximum limiting value, any crates requiring less than the said limiting value can be rejected. The process can be fully automated.

FIG.1

1

## PROCESS AND DEVICE FOR SELECTING DAMAGED PLASTIC CRATES

The invention relates to a process and a device for selecting damaged specimens from a number of plastic crates presented.

In use, plastic crates will eventually show damage which makes them unsuitable for further use. This is true particularly of damage causing the mechanical strength of the crate to decline, owing to which the crate may collapse when forming part of a pile. The damage may be of a mechanical and/or chemical nature and is often not visually perceptible. The latter makes its selection difficult.

The most frequent chemical damage is cause by UV radiation acting upon the plastic material when the crates are exposed to sunlicht. On plastics UV radiation has a brittling effect. In the material the brittleness will cause microcracks imperceptible to the eye, which will initiate larger cracks when the material is brought under load.

The degree to which the crate material is embrittled at a particular moment depends on the intensity and the duration of the UV radiation to which the crate has been subjected while in circulation.

The brittleness of a crate increases during service life, and as it does so, the mechanical strength decreases, in part because larger or smaller cracks have developed in mainly the side walls of the crate. In the brittleness of the material and in the strength of the crate connected therewith, great differences are observed between the crates, even in batches of the same age. This circumstance makes it impossible, for the purpose of selecting damaged crates, to follow a method in which crates are taken from circulation on the basis of a certain age as a criterion of rejection. Such a method is economically and technically not justified, because on the one side usable crates will be rejected and on the other side crates with too small a mechanical strength will remain in circulation, which will result in unsafe conditions.

It has already been suggested (see German Auslegeschrift 29 22 535) to determine the mechanical strength of plastic crates by performing bending tests on the gripping edges. The criterion of rejection in this process is the cracking of the edge at a certain deflection. The disadvantages of this method are that only the cripping edges are tested for strength, that the installation for the performance of the tests occupies much space besides the crate conveyor, that the time required for the testing of the crate is rather long, because, for the purpose of testing, the crate must be taken from the conveyor, and that eventually the strength of the crate must be judged visually.

Now, the aim of the invention is to supply a process for selecting damaged specimens from a number of plastic crates presented, which process does not show the said disadvantages.

This is achieved in that the empty crates are passed, on a conveyor, through a measuring station in which each crate is subjected to one or more bending tests, in which process a certain deflection is permitted, the forces required for these bending tests are measured and a crate is regarded as rejected if one or more of the measured values is below a given limiting value.

During the bending tests the crates can be subjected as a whole to a particular deflection. The expression 'as a whole' is to be understood here to mean that not only a particular part of the crate - for instance the gripping edge - is subjected to the bending, but that practically every part is involved therein and contributes to determining the force required for it.

Such a bending test may consist in that the standing walls of the crate are supported in the middle at the bottom and vertical downward forces are exerted on the four corner points of the crate, owing to which the corner ribs of the crate are moved down. All side walls, the bottom and also the partitions, if any, are thus affected by the deformation which occurs. This test will hereinafter be referred to as: single crosswise bending test.

Another process is first to support the first pair of opposite crate walls in the middle at the bottom and to exert vertical downward forces on the second pair of opposite crate walls, upon which, as the second test, the second pair of opposite crate walls are supported at the bottom and vertical downward forces are exerted on the first pair. This test will hereinafter as a whole be referred to as: double crosswise bending test.

A process preferably applied according to the invention in the testing of a crate as a whole also consists of two part tests. In the one test the first pair of diagonally opposite corner ribs are supported at the bottom and on the second pair a vertical force is exerted in downward direction. In the other test the second pair of diagonally opposite corner ribs are supported and on the first pair a vertical downward force is exerted. This test will be referred to hereinafter as: diagonal bending test. The advantage of this process in that in this process two successive corner ribs will be shifted vertically in respect of each other from their original positions into the one as well as the other direction. In applying this process the walls of the crate will be tested in two directions.

By testing the crate as a whole, particularly when it is successively bent, as in the diagonal bending test, into two directions, the measured values of the forces required for it will give an objective reasonable overall picture of the strength of the crate.

Another way of getting a complete picture of the condition of the crate with respect to aging is offered by a preferred mode of realization of the process according to the invention, in which one or more crate wall section are subject to a frame punch bending test. The 'crate wall' is understood here to include the vertical side walls as well as the bottom of the crate. By a frame-punch bending test is meant a bending test in which a section of the wall is supported by a frame on one side and the wall section enclosed in the frame is bent with the aid of a punch on the other side of the crate wall, in such a way that the punch, which is perpendicular to the plane of the frame, is moved in the direction of the frame until a certain deflection of the crate wall has been attained.

It is to be preferred to choose the positions of the frame and the punch in such a way that the frame is on the outside of the crate wall and the punch exerts pressure from the inside, for it has appeared that in many cases the outer face of the wall suffers most from the aging process and will show the greatest amount of microcracks, which means that when in the tests the wall sections are bend outwards as stated, the measurements offer the truest picture of the aging progress.

The amount of deflection applied in the bending tests is chosen to be lower than the amount of a deflection which would bring the crate material of an undamaged new crate beyond its linear elastic range, in other words would result in permanent deformation of the crate. The force required to bring a crate damaged, for instance, by cracking to a certain deflection is, from the start, always below the force required for it with a new crate. So by measuring and comparing forces a conclusion can be drawn about the degree of damage of a crate.

The limiting value below which the force causing is given deflection and leading to rejection of the crate should remain can easily be determined in a single visual test. This limiting value usually differs for each crate design and/or plastic.

The process according to the invention will herein after be elucidated by means of a typical embodiment of the device according to the invention shown in the drawing.

In the drawing

Fig. 1 gives a top view of a device according to the invention,

Fig. 2 a side view of the device of fig. 1 and

Fig. 3 a perspective view of a corner holding piece.

Fig. 4 a device for the realization of a frame-punch bending test.

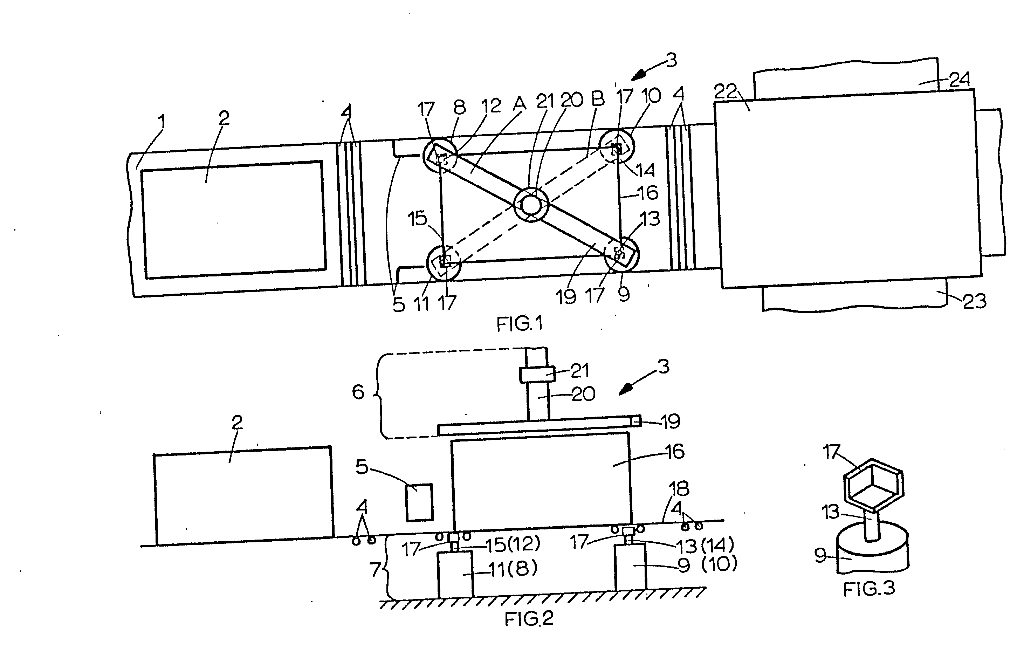

Fig. 1 gives a diagrammatic top view of a device according to the invention. Conveyor 1, by means of which empty crates 2 are passed through measuring station 3, may consist of a roller track of which a few rollers are indicated with 4. The empty crates are guided with guide plates 5 so as to be fed to measuring station 3 in a correct position.

Measuring station 3 comprises upper pusher units 6 mounted over the conveyor and lower pusher units 7. For the purpose of performing a diagonal bending test, the lower pusher units may consist of four hydraulic cylinders 8, 9, 10 and 11, which, using their cylinder rods 12, 13, 14 and 15, are capable of supporting in pairs, in a suitable manner, above conveyor surface 18, the diagonally opposite corner ribs of a crate 16 fed to the measuring station. The cylinder rods are provided on top with corner pieces 17, which are capable of receiving the corners of the crate. A perspective view of such a corner piece has been drawn in fig. 3 for cylinder 9 with cylinder rod 13. When retracted, the cylinder rods with corner pieces are flush with or below conveyor surface 18 for the crates. For the purpose of performing a diagonal bending test the upper pusher units may consist of a beam 19 capable of rotation round a shaft 20 and of being rotated into position A or B (see fig. 1). The ends of beam 19 will always be over two diagonally opposite corner ribs of crate 16. The upper pusher units may incorporate a piezoelectric pressure sensor 21. This pressure sensor, however, may also be fitted in the lower pusher units. The distance between units 6 and 7 may be reduced vertically in order to be able to test crate 16 by bending. This reducing of the distance can be realized either by means of just the hydraulic pusher units, but can also be effected by a combination hereof with vertically adjustable upper pusher units.

A diagonal bending test can now be performed as follows. First cylinder rods 13 and 14 are extended so far that corner pieces 17 project above conveyor surface 18. During its conveyance the crate to be tested will strike against these, upon which cylinder rods 12 and 15 will be moved up as well. Subsequently, the crate will be lifted by the four cylinder rods above conveyor surface 18 to strike against pusher beam 19, which will at first be in position A. Cylinder rods 12 and 13 will move back again, upon which beam 19 will come down and/or cylinder rods 14 and 15 will be moved up further, so that the crate will be bent. The force required for this bending will be measured by means of pressure sensor 21. After that the bending will be discontinued, cylinder rods 12 and 13 will be moved up against the crate, upon which the crate, supported by the four cylinder rods, will be lowered and beam 19 will be placed in position B. The crate will subsequently be subjected to a second bending test. After the crate has been pressed against the beam again by means of the four cylinder rods and cylinder rods 14 and 15 have been retracted, the vertical distance between the beam and cylinder rods 12 and 13 will be reduced. Finally, the crate will be lowered by means of the four cylinder rods to the conveyor surface, in which process corner pieces 17 will be pulled below the conveyor surface so that the crate can pursue its way on the conveyor. Depending on a rejection signal sent forth by a process computer, the crate will be replaced by a good crate in the replacement unit indicated with 22. The replacement unit has a feed arrangement 23 for good and a delivery arrangement 24 for rejected crates. In the process computer the whole program for the movements of the upper and lower pusher units can be incorporated.

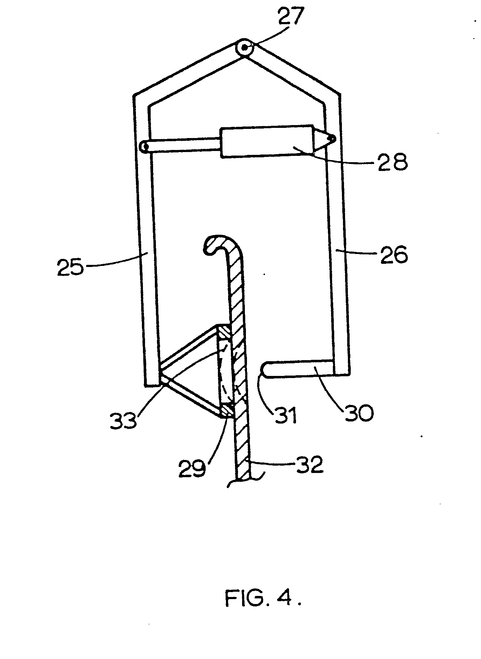

Part of a device for the realization of a frame-punch bending test is shown in Fig. 4. The conveyor for the supply of crates has been left out. In order to lift the crate for a short time during the test, equipment as shown in Fig. 2 can be used, by which the crate 16 is lifted at the four angular points simultaneously by the cylinders 11 (8) and 9 (10), and in which the pushers 6 have been replaced by one or more of the devices shown in Fig. 4. In Fig. 4 the device has two limbs 25 and 26 pivoted at 27, which can be moved relative to each other along an adjustable distance with the aid of a cylinder operating pneumatically or hydraulically. Limb 25 supports at its end a ring-shaped fram 28. The end of limb 26 is provided with a pusher in the form of a punch 29 with a rounded top 30. For the realization of a bending test the tong-shaped device is applied to the wall 31 of a crate 32 in such a way that the ring 28 is on the outer face of the wall 31, while the punch 29 is located on the opposite side of the wall. The two limbs are now brought together, the punch thereby penetrating the ring at a certain distance, which causes the wall to be locally bent outwards as indicated with dotted line 35.

With the device various parts of the wall can be tested, and it is also possible to test several parts simultaneously by applying more than one device.

The pressure required for deflection can be measured with the aid of a piezoelectric pressure not included in the drawing, which can for instance be incorporated in the punch.

## CLAIMS

1. Process for selecting damaged specimens from a number of plastic crates presented, characterized in that the empty crates are passed, on a conveyor, through a measuring station in which each crate is subjected to one or more bending tests, in which process a certain deflection is permitted, the forces required for these bending tests are measured and a crate is regarded as rejected if one or more of the measured values is below a given limiting value.

2. Process according to claim 1, characterized in that the crates are as a whole subjected to a diagonal bending test.

3. Process according to claim 1, characterized in that the crates are as a whole subjected to a single crosswise bending test.

4. Process according to claim 1, characterized in that the crates are as a whole subjected to a double crosswise bending test.

5. Process according to claim 1, characterized in that the crate wall in one or more places is subjected to a frame-punch bending test.

6. Process according to claim 1 and 5, characterized in that the frame is on the outer face of the crate wall.

7. Process according to any one of claims 1 up to and including 6, characterized in that the measured values are fed to a process computer, which, after comparison with the limiting value, transmits a possible rejection signal to a crate replacing unit.

8. Device for carrying out the process according to claim 1 up to and including 4, characterized in that the device comprises a conveyor for empty crates on which the crates can be moved in standing position on a conveyor surface through a measuring station provided with upper pusher units mounted above the conveyor surface, lower pusher units mounted flush with or below the conveyor surface, means for vertically reducing the distance between the upper pusher units and the lower pusher units and means for measuring the forces required for the bending tests.

9. Device for the realization of the process according to claims 1,5 and 6, characterized in that the device comprises a circular frame and a punch movable in a direction perpendicular to the plane of the frame, the end of the punch directed to the frame being rounded, and sensors for measuring the forces required in the bending tests being incorporated in the punch.

10. Device according to claim 8 and 9 characterized in that the means for measuring the forces required for the bending tests consist of piezoelectric pressure sensors.

11. Process and device as described in substance in the specification and/or represented in the drawing and elucidated by means hereof.

FIG.1

FIG.2

FIG.3

FIG. 4.

0043170

Application number

EP 81 20 0726

European Patent
Office

EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| D,A | <u>DE - B - 2 922 535</u> (BEROLINA KUNST-STOFF GmbH)<br><br>* from column 4, line 51 to column 6, line 3; figures 1,2 *<br><br>--- | 1,8 | G 01 N 3/00<br>G 01 M 19/00 |
| A | <u>BE - A - 753 722</u> (T. WATERFALL)<br><br>* page 1, lines 21-30 and from page 4, line 16 to page 5, line 20; figures 1,2 *<br><br>--- | 1 | |
| A | <u>US - A - 4 046 000</u> (R.K. WATKINS et al.)<br><br>* column 5, lines 4-20 *<br><br>--------- | 1 | **TECHNICAL FIELDS SEARCHED (Int. Cl.³)**<br><br>G 01 N 3/00<br>3/20<br>G 01 M 15/00<br>5/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 02-10-1981 | ANTHONY |

EPO Form 1503.1  06.78